# EUROPEAN PATENT SPECIFICATION

(11) **EP 1 422 245 B1**
(45) Date of publication and mention of the grant of the patent: **18.04.2007**
(21) Application number: 04004060.2
(22) Date of filing: 21.03.2001
(51) Int. Cl.: C08C 19/44, C08F 297/04

(54) **Method for preparing coupled polymer**
Verfahren zur Herstellung von gekoppelten Polymeren
Procédé de préparation de polymères couplés

(30) Priority: 23.03.2000 US 533746
(43) Date of publication of application: 26.05.2004
(62) Divisional of application: 01918900.0
(73) Proprietor: Firestone Polymers, LLC, Akron, Ohio 44301 (US)
(72) Inventor: Dedecker, Mark, North Canton, OH 44720 (US)
(74) Representative: Albrecht, Thomas

(56) References cited:
- EP-A- 0 754 710
- EP-A- 0 903 373
- EP-A- 0 930 318
- DE-A- 19 803 039
- US-A- 3 281 383
- US-A- 3 959 412
- US-A- 4 004 070

## Description

This invention relates to a method for preparing linear and branched copolymers in a single process. Particularly, this invention relates to a process for the continuous production of polymers having linear and branched chains.

### BACKGROUND OF THE INVENTION

(Co)polymers of conjugated dienes such as butadiene, isoprene and the like possess physical properties that make them suitable for many important applications such as synthetic rubbers and additives to other polymeric systems.

One such system, high impact polystyrene (HIPS), can be manufactured by polymerization of styrene in the presence of 5 to 10% dissolved homo- or copolymer of butadiene or butadiene copolymer rubber. Early in the polymerization, phase separation begins because of the immiscibility of the rubber in the polystyrene being formed and the depletion of the styrene phase. Grafting of polybutadiene with the polystyrene then takes place. Toughness, and other mechanical and rheological properties of HIPS are affected strongly by the nature of the rubber phase. In this regard, some of the characteristics of the rubber that may be modified to control the overall HIPS performance include concentration, volume, particle size, grafting and crosslinking ability, molecular weight, and viscosity.

One focus of the present invention is use of polybutadiene as an additive in HIPS or ABS resins. Specifically, the present invention relates to providing conjugated diene (co)polymers having useful molecular weight and viscosity ranges. In this regard, strictly linear polybutadiene of low molecular weight typically has a low Mooney viscosity, which makes it difficult to handle; conversely, a tetra-coupled version of the same low molecular weight polymer typically has a viscosity that is too high to allow for processing. One mechanism to achieve a desired molecular weight and viscosity is to use a blend of tetra-coupled and linear polymer chains.

One method for manufacturing (co)polymers having linear and branched segments provides a blend of from 40 - 94 parts by weight (pbw) Component A and from 60 - 66 pbw Component B. Component A includes rubbery (co)polymer(s) of conjugated dienes, and at least 60% by weight of the components in the A portion are branched polymers. Component B is generally the same as Component A, but consists of linear (co)polymer(s). The process of manufacture involves forming Component A in a one step, forming Component B in a another step, and then blending the two components.

Another known process is directed to polymerizing at least one diene monomer to a conversion between 30 and 70% to produce low molecular polydiene chains; joining from 20 to 70% of those chains with a suitable branching agent; and allowing the polymerization to continue to produce a polydiene rubber blend. However, by failing to perform sufficient conversion in the first step, insufficient solution viscosity is produced.

European patent application 0 754 710 describes a method of preperation of copolymers of 1,3-butadiene and styrene, useful for the production of tires or elastic materials, characterized by a reduced rolling resistance without detriment to other properties such as skid resistance. The copolymer is prepared using anionic polymerization of 1,3-butadiene and styrene and coupling of part of the chains in star shape with an appropriate compound of tin or silicon, terminating the remainder of the linear chains without coupling using an appropriately selected different compound.

European patent application 0 930 318 describes a process for preparing an asymmetrical tin-coupled rubbery polymer which comprises: (1) continuously polymerizing in a first reactor at least one diene monomer to a conversion of at least about 90 percent, utilizing an anionic initiator to produce a polymer cement containing living polydiene rubber chains; (2) continuously feeding the polymer cement produced in the first reactor into a second reactor; (3) adding a tin halide to the polymer cement in a second reactor under conditions of agitation to produce a polymer cement having the tin halide homogeneously dispersed therein, wherein the residence time in the second reactor is within the range of about 15 minutes to about 4 hours; (4) continuously feeding the polymer cement having the tin halide homogeneously dispersed therein into a plug flow reactor having a residence time of about 15 minutes to about 1 hour to produce a polymer cement of the asymmetrically tin-coupled rubbery polymer; and continuously withdrawing the polymer cement of the asymmetrically tin-coupled rubbery polymer from the plug flow reactor.

EP 0 903 373 describes a tire tread rubber composition which is comprised of (1) from 20 phr to 60 phr of tin-coupled polybutadiene rubber, (2) from 20 phr to 60 phr of a rubber selected from the group consisting of natural rubber and synthetic polyisoprene and (3) from 5 phr to 40 phr of high vinyl polybutadiene rubber.

US patent 3,281,383 describes a method of making a branched polymer which comprises polymerizing monomers selected from the group consisting of conjugated dienes and vinyl-substituted aromatic compounds in the presence of an organomono-lithium initiator and reacting the resulting mono-lithium-terminated polymer with from 0.1 to about 1 equivalent based on the lithium in the polymer of a compound having at least three reactive sites capable of reacting with the carbon-lithium bond of the polymer, exclusive of organic reactant materials having halogen atoms that are attached to a carbon atom which is alpha to an activating group selected from the group consisting of an ether linkage, a carbonyl and a carbon-to-carbon double bond, thereby coupling said polymer with said compound.

German patent application 198 03 039 describes a rubber composition for high performance tire treads comprising:
(a) about to about 50 wt.-% of a coupled copolymer with low molecular weight of an aromatic vinyl compound and a conjugated diene or a conjugated diene homo-polymer with a molecular weight of 5 x 10⁴ to 35 x 10⁴,
(b) about 10 to about 60 wt.-% of a non-coupled copolymer of an aromatic vinyl compound and a conjugated diene having a molecular weight of 10 x 10⁴ to 80 x 10⁴, and
(c) 5 to 60 wt.-% of a coupled copolymer of an aromatic vinyl compound and a conjugated diene having a molecular weight of 45 x 10⁴ to 200 x 10⁴.

US patent 3,959,412 describes the preparation of branched block copolymers by polymerizing a conjugated diene with or without a monovinyl substituted aromatic compound employing an organoalkalimetal initiator, coupling after substantially complete conversion with a reagent having at least two groups capable of combining with the polymer alkali metal moieties without terminating activity thereof, and thereafter adding a polymerizable monomer other than that employed in the first step.

### SUMMARY OF THE INVENTION

The present invention provides a continuous process for manufacturing a polymer composition. The process provides a polymer that includes branched and linear segments by polymerizing diene monomers in the presence of an organometallic initiator to a conversion of at least 90%, preferably 99%. To the resulting polydiene chains, a coupling agent is added to obtain a polymer of mixed branched and linear polydiene units. The coupling agent is added at a ratio of about 0.3 to about 0.6 equivalents per organometallic initiator equivalents. The resulting polymer mixture has a Mooney viscosity (ML4) in the range of 60 to 85 and preferably has a solution viscosity in the range of 150 to 190 cP (0.15 kg/m•s to 0.19 kg/m•s).

This process advantageously produces a mixture of linear and branched polymers, thereby gaining the benefits of the individual polymers without requiring separate production segments to make the individual components. Moreover, the process is performed continuously, not requiring separate polymerization stages and a subsequent blending of components. The present invention limits the coupled polymer percentage in the overall mixture to produce a high molecular weight fraction that otherwise would be difficult to process by itself.

The resultant polymer is particularly suited for use as an additive in the manufacture of HIPS and ABS resins.

### DETAILED DESCRIPTION OF PREFFERED EMBODIMENTS

Feedstocks used to provide starting materials for the process of the present invention include one or more conjugated diolefin monomers. Typically, the feedstock is an admixture of the conjugated diolefin(s) with low molecular weight hydrocarbons. Such admixtures, termed low concentration diene streams, are obtained from a variety of refinery product streams such as, e.g., naptha cracking operations.

Preferred diene monomers utilized in the preparation of the linear polydiene chains contain from 4 to 12 carbon atoms, with those containing from 4 to 8 carbon atoms being most commonly used. Isoprene-and 1,3-butadiene are the most common conjugated diolefin monomers used in this process. Additional monomers that can be utilized include, but are not limited to, 1,3-pentadiene, 2-methyl-1,3-pentadiene, 4-butyl-1,3-pentadiene, 1,3-hexadiene, 1,3-octadiene, 2,3-dimethyl-1,3-butadiene, piperylene, 2,3-dibutyl-1,3-pentadiene, 2-ethyl-1,3-pentadiene, 2-ethyl-1,3-butadiene, 3-butyl-1,3-octadiene, 2-phenyl-1,3-butadiene and styrene,

These can be used alone or in combinations.

Some examples of low molecular weight hydrocarbons that can be admixed with the monomers in the polymerization feed include propane, propylene, isobutane, n-butane, 1-butene, isobutylene, trans-2-butene, cis-2-butene, vinylacetylene, cyclohexane, ethylene, propylene, hexane, heptane and octane.

Polydiene rubbers that are co- or terpolymers of one or more diolefin monomers with one or more other ethylenically-unsaturated monomers also can be prepared from the process of this invention. Some representative examples of potentially useful ethylenically unsaturated monomers include vinylidene monomers; vinyl aromatics such as styrene, α-methylstyrene, bromostyrene, chlorostyrene and fluorostyrene; α-olefins such as ethylene, propylene and 1-butene; vinyl halides, such as vinylbromide, chloroethane (vinylchloride), vinylfluoride, vinyliodide, 1,2-dibromethene, 1,1-dichloroethane (vinylidene chloride) and 1,2-dichloroethane; vinyl esters, such as vinyl acetate; and α,β-olefinically unsaturated nitriles, such as acrylonitrile amides, such as (meth)acrylamide, N-methyl acrylamide, N,N-dimethylacrylamide and methacrylamide.

The polymerization normally is carried out in a hydrocarbon solvent which can be one or more aromatic, paraffinic, or cycloparaffinic compounds. The solvents normally contain from 4 to 10 carbon atoms per molecule and are liquids under the conditions typically used for such polymerizations. Representative examples of potentially useful organic solvents include one or more of pentane, cyclohexane, n-hexane, benzene, toluene, xylene and ethyl benzene. In solution polymerizations which utilize the process of this invention, the polymerization medium can include 5 to 35 weight percent monomers, preferably from 10 to 30 weight percent monomers, and more preferably 20 to 25 weight percent monomers.

In addition to an organic solvent and reactant monomers, the polymerization mixture contains at least one initiator selected from organometallic compounds of the general formula M(R)ₓ wherein M is Group I or II metal and R is an organic group (described in more detail below). Organometallic initiators include the mono- and multi-functional types known for polymerizing the monomers described herein. Generally, monofunctional organometallic initiators are preferred. Preferred metals include lithium, potassium, sodium, zinc, magnesium, and aluminum. Of these, organolithium initiators are particularly preferred.

The term "organolithium compounds", as employed herein, refers to those materials which correspond to the formula LiR, wherein R is a C₁-C₂₀ hydrocarbyl radical, preferably C₃-C₆, advantageously an aliphatic radical, but also may be C₆-C₂₀, preferably C₆-C₁₂, cycloaliphatic or aromatic radical. Preferred R groups include n-butyl and see-butyl, although other suitable R groups include but are not restricted to ethyl, n-propyl, isopropyl, n-amyl, sec-amyl, sec-hexyl, n-hexyl, n-heptyl, octyl, nonyl, decyl, dodecyl, octadecyl, phenyl, tolyl, dimethylphenyl, ethylphenyl, naphthyl, cyclohexyl, methylcyclohexyl, ethylcyclohexyl, cycloheptyl, allyl, 2-butenyl, 2-methyl butenyl, cyclopentylmethyl, methycyclopentylethyl, pohenylethyl, cyclopentadienyl, naphthyl and penylcyclohexyl.

The amount of organometallic initiator utilized can vary according to the monomer(s) being polymerized and the molecular weight desired for the resultant polymer. However, as a general rule, from 0.01 to 1 phm (parts per 100 pbw of monomer) of initiator typically is used. In most cases, 0.025 to 0.07 phm of the organometallic initiator is sufficient.

The polymerization temperature can vary over a broad range from -20 to 150°C although, in most cases, a temperature within the range of about 30 to 120°C is preferred. The pressure used will normally be sufficient to maintain the reaction mixture as a substantially liquid phase under the conditions of the polymerization reaction.

The polymerization reaction generally is conducted for a time sufficient to obtain a conversion of at least about 90% and preferably at least 99% conversion. Accordingly, using 1,3-butadiene as monomer and the preferred range of initiator, the first stage of the process typically yields polybutadiene having a weight average molecular weight (M_{w}) in the range of 70,000 to 250,000.

A coupling agent can be added to obtain the preferred mixture of linear and branched polydiene units. While many coupling agents are known in the art and may be used in the present invention, a multifunctional coupling agent that joins at least three polymer chains is preferred. Representative examples of suitable coupling agents include multi-vinyl aromatic compounds, multi-epoxides, multi-isocyanates, multi-amines, multi-aldehydes, multi-ketones, multi-halides, multi-anhydrides and multi-esters. Preferred coupling agents include multihalides such as SiCl₄, SiBr₄, and Sil₄. In addition to these silicon multihalides, other metal muttihalides, particularly those of tin, lead, or germanium also can be readily employed as the coupling agent. Preferred among these are SnCl₃, hexachloraldisilane, methyl trichlorosilane, CCl₄, and CH₃SnCl₃.

The coupling reaction can be terminated by any known method such as the addition of an active hydrogen-containing compound such as, e.g., water, lower alcohols, etc.

Coupling agent can be added in a ratio of 0.2 to 0.8 coupling equivalents to initiator equivalents. More preferably, the ratio can be 0.3 to 0.6 equivalents of coupling agent to organometallic initiator. In this manner, the desired ratio of linear units to branched units can be achieved to provide a polymer having a solution viscosity in the range of 100 to 300 cP (0.10 to 0.30 kg/m•s) and Mooney viscosity in the range of 30 to 120 (ML4). A M_{w} of between 150,000 and 350,000, preferably from 225,000 to 275,000, can be obtained.

As recognized by the skilled artisan, a variety of modifications and/or additions to the basic process of this invention can be made without departing from the intention thereof. For example, various modifiers stabilizers and antioxidants may be employed.

To further illustrate the instant invention, the following exemplary embodiment is provided.

The system was first flushed and dried. Into a first mixing tank were combined approximately 285 phm hexane, approximately 100 phm 1,3-butadiene, approximately 0.02 phm 1,2-butadiene, a titrating agent and vinyl modifier. This blended mixture was transferred to a second reaction tank and approximately 0.067 phm butyllithium catalyst was added. The reaction raised the temperature to between approximately 93° and 104°C and proceeded until approximately greater than 98% monomer conversion was achieved. The resultant polybutadiene was transferred to a third mixing tank to which approximately 0.02 phm SiCl₄ was added (SiCl₄/Li = 0.45 Cl/Li; coupling agent to initiator equivalents). A stabilizer was added, and the reaction terminated by the addition of water. The resultant product was dried and baled. The polybutadiene had a solution viscosity of about 170 cP (0.170, k/m•s), a Mooney viscosity of about 65 (ML4), and a M_{w} of 260,000. Accordingly, mixed coupled and linear polybutadiene having the desired characteristics can be prepared via the inventive process.

While certain representative embodiments and details have been shown for purposes of illustrating the present invention, various modifications and changes to the process can be made without departing from the scope of the present invention.

## Claims

1. A method for preparing a linear and branched polybutadiene composition useful in high impact monovinylidene aromatic compositions, the method comprising:
a) polymerizing monomer consisting essentially of conjugated diene in the presence of an organic metallic initiator of the formula M(R)ₓ, wherein R represents an organic group, and M represents a Group I or Group II metal, to thereby convert at least 90% of the monomer into 1 or more polydiene polymer chains; and,
b) coupling the polydiene chains by adding a coupling agent, where the amount of coupling agent added is such that the ratio of equivalents of coupling agent to equivalents of polydiene polymers is 0.3 to 0.6, wherein said resulting polybutadiene composition has a Mooney viscosity in the range of 60 to 85 (ML4).

2. A method for synthesizing a high impact modified mono vinylidene aromatic polymer composition, the method comprising:
a) polymerizing conjugated diene monomer, optionally together with monovinyl aromatic monomer, in the presence of an organic metallic initiator of the formula M(R)ₓ, wherein R represents an organic group, and M represents a Group I or Group II metal, to thereby convert at least 90% of the monomer into 1 or more living polymer chains;
b) coupling of the living polymer chains by adding a coupling agent, where the amount of coupling agent added is such that the ratio of equivalents coupling agent to equivalents of living polymers is 0.3 to 0.6 to thereby provide a linear and branched copolymer, wherein said resulting copolymer has a Mooney viscosity in the range of 60 to 85 (ML4);
c) combining the copolymer with mono vinylidene aromatic monomer to thereby provide a mixture that includes from 5 to 10% partially coupled polymer and 90 to 95% mono vinylidene aromatic monomer; and,
d) polymerizing the mono vinylidene aromatic monomer within the mixture.

3. The method of claims 1 or 2, where the coupling agent is silicon tetrachloride, and where the amount of silicon tetrachloride coupling agent added is such that the ratio of equivalents of chloride on the coupling agent to equivalents of polydiene polymers is 0.3 to 0.6.

4. The method of claim 1 or 2, wherein the coupling agent comprises one or more multiesters.

5. The method of any one of the preceding claims further comprising the addition of water to terminate the coupling reaction.

6. The method of any one of the preceding claims wherein the polybutadiene composition or the copolymer has a solution viscosity of 100 to 300 cP and a molecular weight of between 150,000 and 350,000.

7. The method of claim 6, wherein the solution viscosity comprises 150 to 190 cP and the molecular weight comprises 225,000 to 275,000.

8. The method of claims 1, 2, 6 or 7, wherein coupling agent comprises one selected from multi-vinyl aromatic compounds, multi-epoxides, multi-isocyanates, multi-amines, multi-aldehydes, multi-ketones, and multi-anhydrides.

9. The method of any one of the preceding claims further comprising performing the method continuously.

10. The method of any one of claims 1-9, wherein the method comprises a single process.

## Patentansprüche

1. Verfahren zur Herstellung einer linearen und verzweigten Polybutadienzusammensetzung, verwendbar für hochschlagfeste aromatische Monovinylidenzusammensetzungen, wobei das Verfahren umfasst:
a) Polymerisieren eines im Wesentlichen aus konjugiertem Dien bestehenden Monomers in Gegenwart eines organischen metallischen Initiators der Formel M(R)ₓ, worin R eine organische Gruppe repräsentiert und M ein Metall der Gruppe I oder der Gruppe II repräsentiert, um **dadurch** mindestens 90% des Monomers in eine oder mehr Polydienpolymerkette(n) umzuwandeln; und
b) Kuppeln der Polydienketten durch Zugabe eines Kupplungsmittels, wobei die Menge des zugegebenen Kupplungsmittels so gewählt ist, dass das Verhältnis der Äquivalente des Kupplungsmittels zu den Äquivalenten an Polydienpolymeren 0,3 bis 0,6 beträgt, wobei die besagte entstehende Polybutadienzusammensetzung eine Mooney-Viskosität im Bereich von 60 bis 85 (ML4) aufweist.

2. Verfahren zur Herstellung einer hochschlagfesten modifizierten aromatischen Monovinylidenpolymerzusammensetzung, wobei das Verfahren umfasst:
a) Polymerisieren eines konjugierten Dienmonomers, wahlweise zusammen mit einem aromatischen Monovinylmonomer in Gegenwart eines organischen metallischen Initiators der Formel M(R)ₓ, worin R eine organische Gruppe repräsentiert und M ein Metall der Gruppe I oder der Gruppe II repräsentiert, um **dadurch** mindestens 90% des Monomers in eine oder mehrere lebende Polymerkette(n) umzuwandeln;
b) Kuppeln der lebenden Polymerketten durch Zugabe eines Kupplungsmittels, wobei die Menge an zugegebenem Kupplungsmittel so gewählt ist, dass das Verhältnis der Äquivalente des Kupplungsmittels zu den Äquivalenten des lebenden Polymers 0,3 bis 0,6 beträgt, um **dadurch** ein lineares und verzweigtes Copolymer bereitzustellen, worin das besagte entstehende Copolymer eine Mooney-Viskosität im Bereich von 60 bis 85 (ML4) aufweist;
c) Kombinieren des Copolymers mit dem aromatischen Monovinylidenmonomer, um **dadurch** eine Mischung bereitzustellen, die 5 bis 10% partiell gekuppeltes Polymer und 90 bis 95% aromatisches Monovinylidenmonomer umfasst; und
d) Polymerisieren des aromatischen Monovinylidenmonomers innerhalb der Mischung.

3. Verfahren nach Anspruch 1 oder 2, worin das Kupplungsmittel Siliciumtetrachlorid ist, und worin die Menge an zugegebenem Siliciumtetrachloridkupplungsmittel so gewählt ist, dass das Verhältnis der Äquivalente an Chlorid am Kupplungsmittel zu den Äquivalenten der Polydienpolymere 0,3 bis 0,6 beträgt.

4. Verfahren nach Anspruch 1 oder 2, worin das Kupplungsmittel einen oder mehrere Multiester umfasst.

5. Verfahren nach einem beliebigen der vorstehenden Ansprüche, des Weiteren umfassend die Zugabe von Wasser zum Beenden der Kupplungsreaktion.

6. Verfahren nach einem beliebigen der vorstehenden Ansprüche, worin die Polybutadienzusammensetzung oder das Copolymer eine Lösungsviskosität von 100 bis 300 cP und ein Molekulargewicht von zwischen 150.000 und 350.000 aufweist.

7. Verfahren nach Anspruch 6, worin die Lösungsviskosität 150 bis 190 cP umfasst und das Molekulargewicht 225.000 bis 275.000 umfasst.

8. Verfahren nach Anspruch 1, 2, 6 oder 7, worin das Kupplungsmittel eines ausgewählt aus aromatischen Multivinylverbindungen, Multiepoxiden, Multiisocyanaten, Multiaminen, Multialdehyden, Multiketonen und Multianhydriden umfasst.

9. Verfahren nach einem beliebigen der vorstehenden Ansprüche, des Weiteren umfassend das kontinuierliche Ausführen des Verfahrens.

10. Verfahren nach einem beliebigen der Ansprüche 1-9, worin das Verfahren einen Einzelvorgang bzw. ein Einzelverfahren umfasst.

## Revendications

1. Procédé de préparation d'une composition de polybutadiène linéaire et ramifié, utile dans des compositions aromatiques de monovinylidène à grande résistance au choc, le procédé comprenant :
a) la polymérisation d'un monomère constitué essentiellement de diène conjugué en présence d'un initiateur métallique organique de formule M(R)ₓ, où R représente un groupe organique, et M représente un métal du Groupe I ou du Groupe II, pour convertir ainsi au moins 90 % du monomère en une ou plusieurs chaînes de polymère polydiène ; et,
b) le couplage des chaînes de polydiène par addition d'un agent de couplage, la quantité ajoutée d'agent de couplage étant telle que le rapport des équivalents d'agent de couplage aux équivalents de polymères polydiènes soit de 0,3 à 0,6, ladite composition de polybutadiène résultante ayant une viscosité Mooney dans l'intervalle de 60 à 85 (ML4).

2. Procédé de synthèse d'une composition de polymère aromatique de monovinylidène modifiée à grande résistance au choc, le procédé comprenant :
a) la polymérisation d'un diène conjugué monomère, facultativement avec un monomère aromatique monovinylique, en présence d'un initiateur métallique organique de formule M(R)ₓ, où R représente un groupe organique, et M représente un métal du Groupe I ou du Groupe II, pour convertir ainsi au moins 90 % du monomère en une ou plusieurs chaînes de polymère vivant ;
b) le couplage des chaînes de polymère vivant par addition d'un agent de couplage, la quantité ajoutée d'agent de couplage étant telle que le rapport des équivalents d'agent de couplage aux équivalents des polymères vivants soit de 0,3 à 0,6, pour obtenir ainsi un copolymère linéaire et ramifié, ledit copolymère résultant ayant une viscosité Mooney dans l'intervalle de 60 à 85 (ML4) ;
c) la mise en association du copolymère avec un monomère aromatique monovinylidénique pour obtenir ainsi un mélange comprenant 5 à 10 % de polymère partiellement couplé et 90 à 95 % de monomère aromatique monovinylidénique ; et
d) la polymérisation du monomère aromatique monovinylidénique au sein du mélange.

3. Procédé selon la revendication 1 ou 2, dans lequel l'agent de couplage est le tétrachlorure de silicium, et dans lequel la quantité ajoutée de tétrachlorure de silicium utilisé comme agent de couplage est telle que le rapport des équivalents du chlorure sur l'agent de couplage aux équivalents de polymères polydiènes soit de 0,3 à 0,6.

4. Procédé selon la revendication 1 ou 2, dans lequel l'agent de couplage comprend un ou plusieurs multi-esters.

5. Procédé selon l'une quelconque des revendications précédentes, comprenant de plus l'addition d'eau pour mettre fin à la réaction de couplage.

6. Procédé selon l'une quelconque des revendications précédentes, dans lequel la composition de polybutadiène ou le copolymère a une viscosité en solution de 100 à 300 cP et un poids moléculaire compris entre 150 000 et 350 000.

7. Procédé selon la revendication 6, dans lequel la viscosité en solution est de 150 à 190 cP et le poids moléculaire est compris entre 225 000 et 275 000.

8. Procédé selon la revendication 1, 2, 6 ou 7, dans lequel l'agent de couplage comprend une espèce choisie parmi les composés aromatiques multi-vinyliques, les multi-époxydes, les multi-isocyanates, les multi-amines, les multi-aldéhydes, les multi-cétones et les multi-anhydrides.

9. Procédé selon l'une quelconque des revendications précédentes, comprenant de plus l'exécution du procédé en continu.

10. Procédé selon l'une quelconque des revendications 1 à 9, dans lequel le procédé comprend une seule opération.
